# EUROPEAN PATENT APPLICATION

(11) **EP 4 631 752 A1**
(43) Date of publication of application: **15.10.2025**
(21) Application number: 25168502.0
(22) Date of filing: 04.04.2025
(51) Int. Cl.: B60H 1/32, B60H 1/00

(54) **COOLING SYSTEM FOR A VARIABLE FREQUENCY DRIVE ASSOCIATED WITH A TRANSPORT REFRIGERATION UNIT**

(30) Priority: 10.04.2024 US 202463632108 P
(71) Applicant: Carrier Corporation, Palm Beach Gardens, FL 33418 (US)
(72) Inventor: VENNE, Samuel, East Syracuse 13057 (US); VERMA, Parmesh, East Syracuse 13057 (US)
(74) Representative: Dehns

(57) **Abstract**

Described herein is a transport refrigeration unit "TRU" (102). The TRU (102) comprises an evaporator (110), and a variable frequency drive "VFD" (200) operatively coupled to a compressor and/or an evaporator fan (114) associated with the TRU (102), wherein at least a portion of the VFD (200) is configured downstream or upstream of evaporator coils (110) of the evaporator (110) in an evaporator compartment (108-1) associated with the TRU (102).

## Description

### BACKGROUND

This invention relates to the field of transport refrigeration units, and more particularly, a cooling system for a variable frequency drive associated with a transport refrigeration unit, and a method thereof.

### SUMMARY

According to a first aspect of the invention there is provided a transport refrigeration unit (TRU). The TRU comprises an evaporator comprising an evaporator coil (optionally a plurality of evaporator coils), and a variable frequency drive (VFD) operatively coupled to a compressor and/or one or more fans associated with the TRU, wherein at least a portion of the VFD is configured downstream or upstream of the evaporator coil(s) in an evaporator compartment of the TRU.

Optionally, the evaporator fan is a variable speed fan, wherein the TRU is configured to control speed of the evaporator fan to adjust flow rate of the cool air downstream of the evaporator and/or being supplied towards the VFD.

Optionally, the VFD comprises a plurality of heat-dissipating structures protruding from an exterior surface of the VFD, wherein at least the plurality of heat-dissipating structures associated with the VFD is disposed in an air flow path downstream or upstream of the evaporator coils in the evaporator compartment.

Optionally, the VFD is at least partially disposed in a structure separating the evaporator compartment and a condenser compartment associated with the TRU.

Optionally, the VFD is disposed in the structure such that at least the plurality of heat-dissipating structures associated with the VFD remains disposed in the evaporator compartment.

Optionally, the VFD is fully disposed within the evaporator compartment of the TRU such that the VFD remains downstream or upstream of the evaporator coil(s) in the evaporator compartment.

Optionally, the evaporator fan is configured upstream or downstream of the evaporator coils.

Optionally, the VFD comprises a secondary fan configured to direct the cool air received from the evaporator towards the plurality of heat-dissipating structures associated with the VFD.

According to a second aspect of the invention there is provided a cooling system for a variable frequency drive (VFD) associated with a transport refrigeration unit (TRU). The system comprises an evaporator, and an evaporator fan configured upstream or downstream of evaporator coils associated with the evaporator, wherein at least a portion of the VFD is configured downstream or upstream of the evaporator coils or the fan in an evaporator compartment of the TRU.

Optionally, the evaporator fan is a variable speed fan, wherein the system is configured to control speed of the evaporator fan to adjust flow rate of the cool air downstream of the evaporator and/or being supplied towards the VFD.

Optionally, the VFD comprises a plurality of heat-dissipating structures protruding from an exterior surface of the VFD, wherein at least the plurality of heat-dissipating structures associated with the VFD is disposed in an air flow path downstream or upstream of the evaporator coils or the fan in the evaporator compartment.

Optionally, the VFD is at least partially disposed in a structure separating the evaporator compartment and a condenser compartment associated with the TRU.

Optionally, the VFD is disposed in the structure such that at least the plurality of heat-dissipating structures associated with the VFD remains disposed in the evaporator compartment.

Optionally, the VFD is fully disposed within an evaporator associated with the TRU such that the VFD remains downstream or upstream of the evaporator coils or the fan in the evaporator compartment.

According to a third aspect of the invention there is provided a method for cooling a variable frequency drive (VFD) associated with a transport refrigeration unit (TRU). The method comprises steps of configuring at least a portion of the VFD downstream or upstream of evaporator coils in an evaporator compartment associated with the TRU, and supplying at least a portion of air being cooled by the evaporator coils towards the corresponding portion of the VFD in the evaporator compartment.

Optionally, the VFD comprises a plurality of heat-dissipating structures protruding from the VFD, wherein the method comprises the steps of: disposing at least the plurality of heat-dissipating structures associated with the VFD in an air flow path downstream of the evaporator coils in the evaporator compartment, and supplying at least a portion of the air being cooled by the evaporator coils towards the plurality of heat-dissipating structures of the VFD.

Optionally, the method comprises the steps of at least partially disposing the VFD in a structure separating the evaporator compartment and a condenser compartment associated with the TRU.

Optionally, the method comprises the steps of fully disposing the VFD within an evaporator compartment of the TRU such that the VFD remains downstream of the evaporator coils.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention and are incorporated in and constitute a part of this specification. The drawings illustrate exemplary embodiments of the invention and, together with the description, serve to explain the principles of the invention by way of example only.

In the drawings, similar components and/or features may have the same reference label. Further, various components of the same type may be distinguished by following the reference label with a second label that distinguishes among the similar components. If only the first reference label is used in the specification, the description is applicable to any one of the similar components having the same first reference label irrespective of the second reference label.
FIG. 1A illustrates an exemplary front view of the transport refrigeration unit (TRU) where the VFD is configured downstream of the evaporator within the evaporator compartment.
FIG. 1B illustrates an exemplary front view of the transport refrigeration unit (TRU) of FIG. 1A without the cargo wall.
FIG. 1C illustrates an exemplary side cross-sectional view of the TRU where the VFD is disposed in the POD such that only the heat-dissipating structures of the VFD remain within the evaporator compartment.
FIG. 1D illustrates an exemplary side cross-sectional view of the transport refrigeration unit (TRU) where the VFD is fully disposed within the evaporator compartment.
FIG. 1E illustrates an exemplary front view of the transport refrigeration unit (TRU) where the VFD is configured upstream of the evaporator within the evaporator compartment.
FIGs. 2A and 2B illustrate exemplary views of the VFD having heat-dissipating structures on one side of the VFD.
FIG. 3 illustrates an exemplary method for cooling the VFD associated with a TRU.

### DETAILED DESCRIPTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

In the specification, reference may be made to the spatial relationships between various components and to the spatial orientation of various aspects of components as the devices are depicted in the attached drawings. However, as will be recognized by those skilled in the art after a complete reading of the specification, the components of this invention described herein may be positioned in any desired orientation. Thus, the use of terms such as "above," "below," "upper," "lower," "first", "second" or other like terms to describe a spatial relationship between various components or to describe the spatial orientation of aspects of such components should be understood to describe a relative relationship between the components or a spatial orientation of aspects of such components, respectively, as the VFD, evaporator, POD, TRU, and corresponding components, described herein may be oriented in any desired direction.

A variable frequency drive (VFD) may be implemented in a transport refrigeration unit (TRU) such as a trailer refrigeration unit, container refrigeration unit, and truck refrigeration unit to control the operation of a compressor and/or evaporator or condenser fans associated with the TRU. However, the temperature of the VFD may increase during operation, thereby reducing the performance or completely shutting off the VFD, which is highly undesirable. Moreover, with the temperature increasing and the tight thermal restrictions in the TRU, it may become difficult to maintain peak performance in the VFD with the increasing load and average ambient temperatures. There is, therefore, a need to provide a simple and efficient cooling system for the VFD in TRUs to provide cool air to the VFD to maintain the VFD at a safe operable temperature and optimum performance.

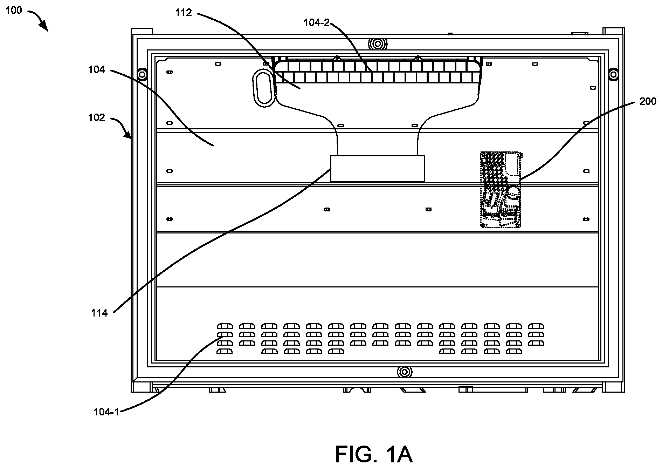

Referring to FIG. 1A to 1D, an exemplary embodiment of the cooling system 100 for a variable frequency drive (VFD) of a transport refrigeration unit (TRU) 102 or a vehicle is disclosed. In one or more embodiments, the TRU 102 includes a trailer refrigeration unit, a container refrigeration unit, a truck refrigeration unit, and the like. The TRU 102 can include a cabinet (also designated as 102, herein) accommodating various components of the TRU 102, which can be attached to transportation cargo. The cabinet 102 can include or can be attached to a cargo area wall 104 separating the transportation cargo to the TRU 102 and can further include a POD 106 (insulative barrier) thermally separating an evaporator compartment 108-1 from a condenser compartment 108-2 associated with the TRU 102.

In the evaporator compartment, the cargo area wall 104 can be formed to define an inlet 104-1 and an outlet 104-2 in the cabinet of the TRU 102 which can fluidly connect the transportation cargo with the evaporator compartment 108-1 of the TRU 102. The evaporator compartment 108-1 can include an evaporator 110 comprising evaporator coils configured upstream of the inlet 104-1 of the cabinet 102 and a nozzle 112 configured downstream of the evaporator coils at the outlet 104-2 of the cabinet 102. In addition, one or more evaporator fans 114 (collectively referred to as evaporator fans 114, herein) can also be configured upstream and/or downstream of the evaporator coils 110 in the in the evaporator compartment 108-1 to facilitate the inflow of air from the transportation cargo into the evaporator compartment 108-1 via the inlet 104-1, further facilitating the air to flow across the evaporator coils 110 to cool the air, and further supplying the cooled air into the transportation cargo via the outlet 104-2.

The condenser compartment 108-2 can include a condenser (not shown) comprising condenser coils fluidically connected to the evaporator coils 110 via a compressor, and an expansion valve. However, the evaporator compartment 108-1 remains thermally separated by the POD 106 that acts as a thermal barrier and support structure. In addition, the condenser compartment 108-2 can also include one or more condenser fans (not shown) that can be configured upstream and/or downstream of the condenser coils to facilitate the flow of air across the condenser coils. In one or more embodiments, the evaporator 110 can be connected to the condenser in a closed-loop cycle where the evaporator 110 absorbs heat from the air received from the transportation cargo or trailer or truck or container, causing the refrigerant flowing through the evaporator coils 110 to evaporate while cooling the air. This cool air can then flow through the evaporator compartment 108-1 and further into the transportation cargo via the nozzle 112 and the outlet 104-2. The vaporized refrigerant can then be compressed by the compressor, turning it into a high-pressure, high-temperature gas. This gas can then be condensed in the condenser, releasing heat into the environment and transforming the refrigerant back into a liquid. The liquid refrigerant flows back to the evaporator 110 through the expansion valve, ready to absorb heat from the evaporator compartment 108-1. This continuous cycle allows the TRU 102 to effectively regulate the temperature of the air within the evaporator compartment 108-1 and within the transportation cargo.

In one or more embodiments, the compressor can be a variable speed compressor (not shown) and the evaporator fans 114 and/or the condenser fans can also be a variable speed AC or DC powered fan. Accordingly, the VFD 200 can be operatively connected to the compressor. the condenser fans 114, and/or the condenser fans to drive the compressor and/or the fans together at same predefined speed. Generally, the VFD 200 is positioned in the condenser compartment 108-2 or near an engine of the TRU 102 which may elevate the temperature of the VFD 200, thereby affecting the performance of the VFD 200 as well as the overall TRU 102. In addition, the temperature of the VFD 200 also rises during operation as the system load or ambient temperature increases. The cooling system 100 overcomes the above-mentioned drawbacks and limitations associated with VFD 200 in TRUs 102, by providing cool evaporator 110 air to the VFD 200 in order to maintain the VFD 200 at a safe operable temperature for optimum performance.

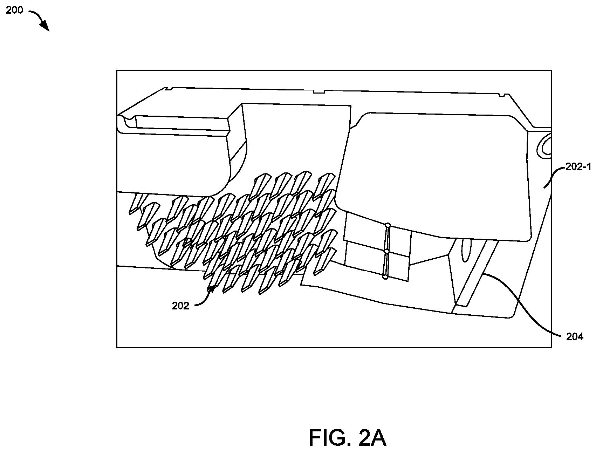

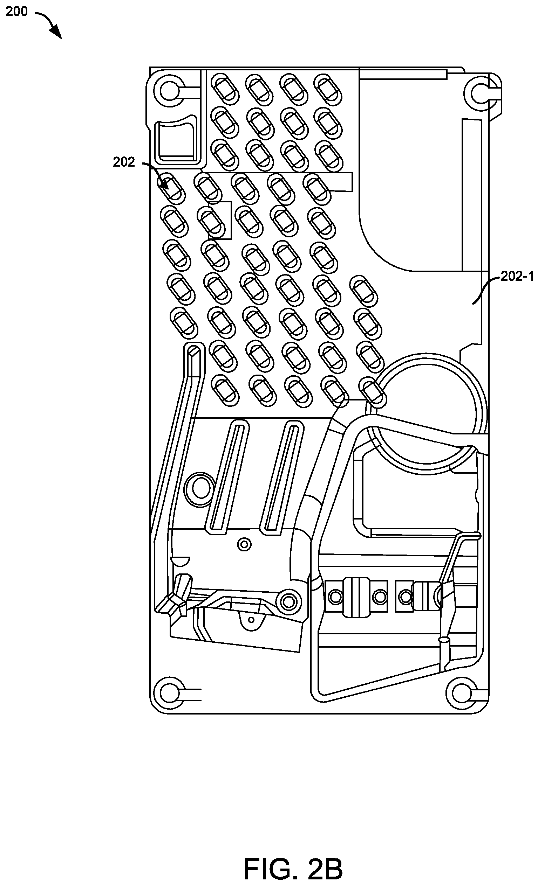

In one or more embodiments, referring to FIGs. 2A and 2B, the VFD 200 can include a plurality of heat-dissipating structures 202 (also referred to as fins) protruding from an exterior surface 202-1 of the VFD 200. These heat-dissipating structures 202 are usually thin in form of fins, extended structures 202 that protrude from the surface to be cooled. The heat-dissipating structures 202 can be configured to absorb the heat dissipated by internal components of the VFD 200. The primary function of heat-dissipating structures 202 is to increase the surface area in contact with the surrounding air or fluid. The larger the surface area, the more heat can be transferred from the VFD 200 to the air. In addition, the VFD 200 can include a secondary fan 204 to cool the heated heat-dissipating structures 202, however, in some embodiments, the VFD 200 may not include the secondary fan.

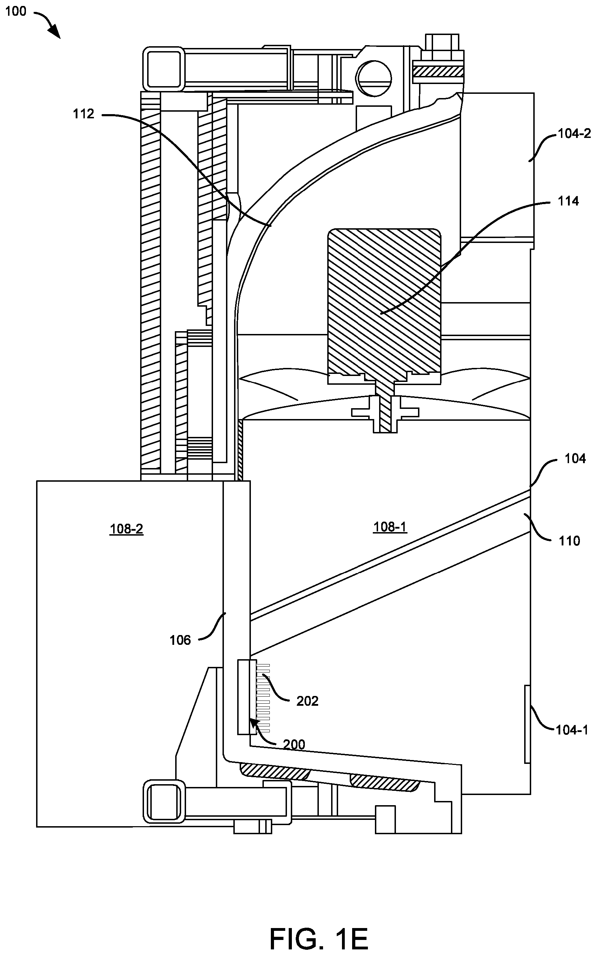

In one or more embodiments, the cooling system 100 can include the evaporator 110, and the fans 114, where at least a portion of the VFD 200 can be configured downstream of evaporator coils 110 of the evaporator 110 in the evaporator compartment 108-1 as shown in FIGs. 1A to 1D, such that cool air from the evaporator 110 can be used to cool the VFD 200. For instance, in one or more embodiments, the VFD 200 can be configured in the TRU 102 such that at least the plurality of heat-dissipating structures 202 associated with the VFD 200 remains disposed in an airflow path downstream of the evaporator coils 110 within the evaporator compartment 108-1. However, in one or more embodiments, at least a portion of the VFD 200 can also be configured upstream of evaporator coils 110 of the evaporator 110 in the evaporator compartment 108-1 as shown in FIG. 1E, such that air coming from the transportation cargo towards the evaporator 110 to be cooled can be used to cool the VFD 200.

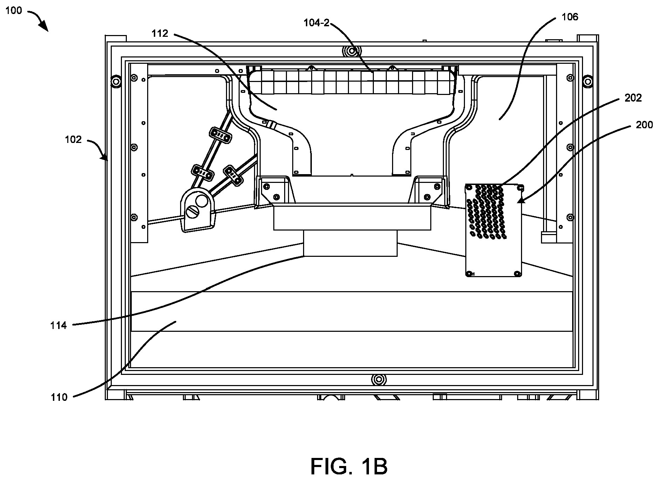

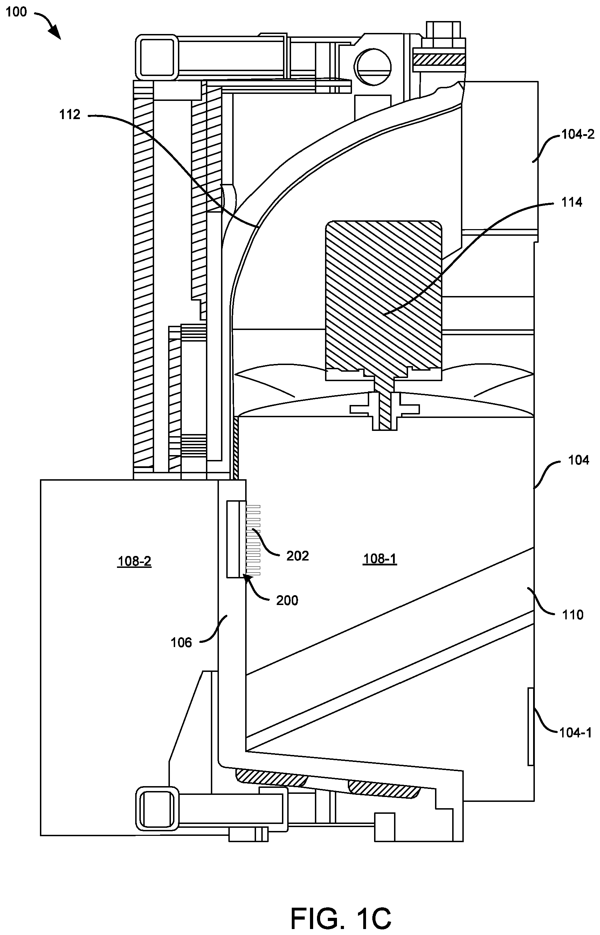

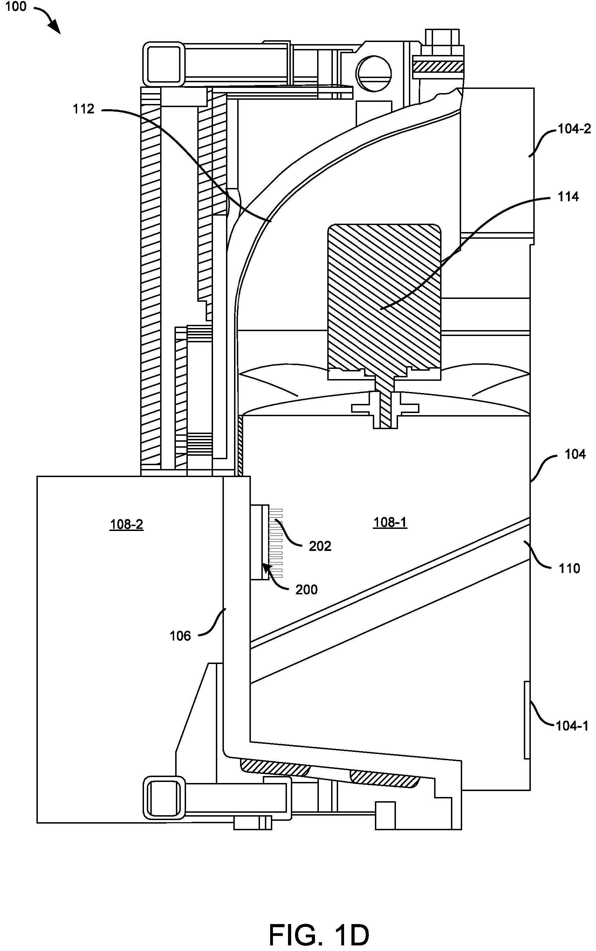

In one or more embodiments, as shown in FIGS. 1B and 1C, the VFD 200 can be at least partially disposed in the POD 106 separating the evaporator compartment 108-1 and the condenser compartment 108-2 associated with the TRU 102, such that at least the plurality of heat-dissipating structures 202 associated with the VFD 200 remains disposed in the evaporator compartment 108-1 and the remaining body of the VFD 200 remains in the evaporator compartment 108-1 or disposed in the POD 106. Accordingly, the cool air supplied (post cooling) by the evaporator coils 110 or the air to be cooled by the evaporator coils 100 can flow across the heat-dissipating structures 202 associated with the VFD 200, thereby absorbing heat from the VFD 200 and keeping the VFD 200 cool at a safe operable temperature. It is to be appreciated that as only the heat-dissipating structures 202 of the VFD 200 remain in the evaporator compartment 108-1 or the evaporator 110 air stream, while the remaining body of the VFD 200 remains in the POD 106 or in the condenser compartment 108-2, as a result, there is no or negligible air pressure drop in the evaporator compartment 108-1 due to the VFD 200 and the cool airflow within the transportation cargo also remains unaffected. However, in other embodiments, as shown in FIG. 1D, the whole VFD 200 can be fully disposed within the evaporator compartment 108-1 of the TRU 102 such that the whole VFD 200 remains in thermal contact with the cool air flowing through the evaporator compartment 108-1.

In one or more embodiments (not shown), the VFD 200 can be fully disposed in the condenser compartment 108-2 associated with the TRU 102. In such embodiments, the TRU 102 can include a conduit extending between the evaporator compartment 108-1 and the VFD 200, where the conduit can be configured to supply at least a portion of air to be cooled or post cooling by the evaporator coils 110 towards the VFD 200. This may help keep the VFD 200 at a safe operable temperature for optimum performance and/or reliability.

In addition, the TRU 102 can be configured to control the speed of the evaporator fans 114 to adjust flow rate of the cool air downstream of the evaporator 110 and/or being supplied towards the VFD 200. This may help in controlling the temperature of the VFD 200. Further, the secondary fan 204 of the VFD 200 can also be implemented to direct the cool air received from the evaporator 110 towards the plurality of heat-dissipating structures 202 associated with the VFD 200 to enhance the cooling of the VFD 200.

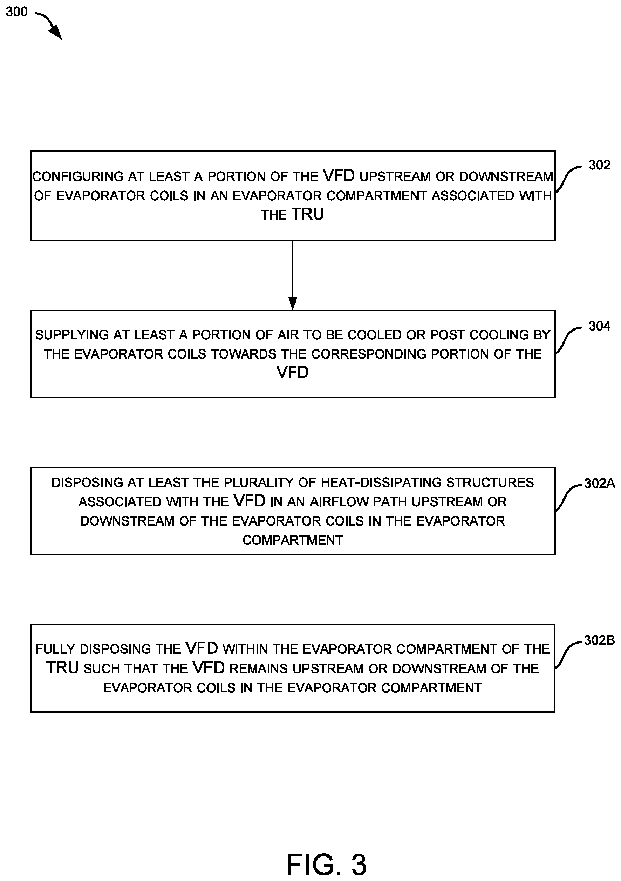

Referring to FIG. 3, method 300 for cooling a variable frequency drive (VFD) associated with a transport refrigeration unit (TRU) is disclosed. The method 300 can include step 302 of configuring at least a portion of the VFD downstream or upstream of evaporator coils in an evaporator compartment associated with an evaporator of the TRU. Further, method 300 can include step 304 supplying at least a portion of air to be cooled or post cooling by the evaporator coils towards the VFD within the condenser compartment.

In one or more embodiments, method 300 can include step 302A of disposing at least the plurality of heat-dissipating structures associated with the VFD in an airflow path downstream or upstream of the evaporator coils within the evaporator compartment, while the rest body of the VFD remains in the condenser compartment or disposed in the POD. Method 300 can further include step 304 of supplying at least a portion of the air to be cooled or post cooling by the evaporator coils towards the plurality of heat-dissipating structures of the VFD. As only the heat-dissipating structures of the VFD remain in the evaporator compartment or the evaporator air stream, while the remaining body of the VFD remains in the POD or in the condenser compartment, as a result, there is no or negligible air pressure drop in the evaporator compartment due to the VFD and the cool airflow within the transportation cargo also remains unaffected.

In one or more embodiments, method 300 can include step 302B of fully disposing the VFD in the airflow path downstream or upstream of the evaporator coils within the evaporator compartment, followed by step 304 of supplying at least a portion of the air to be cooled or post cooling by the evaporator coils towards the VFD to keep the VFD at a safe operable temperature.

In one or more embodiments, when the VFD is fully disposed in the condenser compartment associated with the TRU, method 300 can include the step of supplying at least a portion of air to be cooled or post cooling by the evaporator coils towards the VFD via a conduit extending between the evaporator compartment and the VFD. This may help supply a portion of air being cooled by the evaporator coils toward the VFD in the condenser compartment, thereby keeping the VFD at a safe operable temperature.

While various embodiments of this invention have been elaborated for the VFD having a specific design and a specific number of heat-dissipating structures (fins) being secured at a given position in the POD, however, VFD can also be of other shapes, sizes, and profiles and can be secured at any other position downstream or upstream of the evaporator coil. In addition, while embodiments of this invention have been elaborated for a cooling system for the VFD of a transport refrigeration unit (TRU), however, the cooling system can also be configured with any vehicle or industrial setup involving evaporators where cooling of the VFD is required.

Thus, this invention overcomes the drawbacks, limitations, and shortcomings associated with existing technologies by providing a simple and efficient cooling system for the VFD in a transport refrigeration unit or a vehicle to provide cool evaporator air to the VFD to maintain the VFD at a safe operable temperature.

While the invention has been described with reference to exemplary embodiments, it will be understood by those skilled in the art that various changes may be made and equivalents may be substituted for elements thereof without departing from the scope of the invention as defined by the appended claims. Modifications may be made to adopt a particular situation or material to the teachings of the invention without departing from the scope thereof. Therefore, it is intended that the invention not be limited to the particular embodiment disclosed, but that the invention includes all embodiments falling within the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refer to at least one of something selected from the group consisting of A, B, C ....and N, the text should be interpreted as requiring only one element from the group, not A plus N, or B plus N, etc.

## Claims

1. A transport refrigeration unit "TRU" (102) comprising:
an evaporator (110) comprising an evaporator coil; and
a variable frequency drive "VFD" (200) operatively coupled to a compressor and/or one or more fans (114) associated with the TRU, wherein at least a portion of the VFD is configured downstream or upstream of the evaporator coil in an evaporator compartment (108-1) of the TRU.

2. The transport refrigeration unit (102) of claim 1, wherein the evaporator fan (114) is a variable speed fan, wherein the TRU is configured to control speed of the evaporator fan to adjust flow rate of the cool air downstream of the evaporator (110) and/or being supplied towards the VFD (200).

3. The transport refrigeration unit (102) of claims 1 or 2, wherein the VFD (200) comprises a plurality of heat-dissipating structures (202) protruding from an exterior surface (202-1) of the VFD, wherein at least the plurality of heat-dissipating structures associated with the VFD is disposed in an airflow path downstream or upstream of the evaporator coil in the evaporator compartment (108-1).

4. The transport refrigeration unit (102) of any preceding claim, wherein the VFD (200) is at least partially disposed in a structure separating the evaporator compartment (108-1) and a condenser compartment (108-2) associated with the TRU.
optionally, wherein the VFD is disposed in the structure such that at least the plurality of heat-dissipating structures (202) associated with the VFD remains disposed in the evaporator compartment.

5. The transport refrigeration unit (102) of any of claims 1 to 3, wherein the VFD (200) is fully disposed within the evaporator compartment (108-1) of the TRU such that the VFD remains downstream or upstream of the evaporator coils (110) in the evaporator compartment (108-1).

6. The transport refrigeration unit (102) of any preceding claim, wherein the evaporator fan (114) is configured upstream or downstream of the evaporator coils (110),
and/or, wherein the VFD (200) comprises a secondary fan (204) configured to direct the cool air received from the evaporator towards the plurality of heat-dissipating structures (202) associated with the VFD.

7. A cooling system (100) for a variable frequency drive "VFD" (200) associated with a transport refrigeration unit "TRU" (102), the system comprising:
an evaporator (110); and
an evaporator fan (114) configured upstream or downstream of evaporator coils associated with the evaporator; wherein at least a portion of the VFD is configured downstream or upstream of the evaporator coils or the fan in an evaporator compartment (108-1) of the TRU.

8. The cooling system (100) of claim 7, wherein the evaporator fan (114) is a variable speed fan, wherein the system is configured to control speed of the evaporator fan to adjust flow rate of the cool air downstream of the evaporator (110) and/or being supplied towards the VFD (200).

9. The cooling system (100) of claims 7 or 8, wherein the VFD (200) comprises a plurality of heat-dissipating structures (202) protruding from an exterior surface (202-1) of the VFD, wherein at least the plurality of heat-dissipating structures associated with the VFD is disposed in an airflow path downstream or upstream of the evaporator coils (110) or the fan in the evaporator compartment (108-1).

10. The cooling system (100) of any of claims 7 to 9, wherein the VFD (200) is at least partially disposed in a structure separating the evaporator compartment (108-1) and a condenser compartment (108-2) associated with the TRU (102),
optionally, wherein the VFD is disposed in the structure such that at least the plurality of heat-dissipating structures (202) associated with the VFD remains disposed in the evaporator compartment.

11. The cooling system (100) of any of claims 7 to 9, wherein the VFD (200) is fully disposed within the evaporator compartment (108-1) associated with the TRU (102) such that the VFD remains downstream or upstream of the evaporator coils (110) or the fan (114) in the evaporator compartment.

12. A method for cooling a variable frequency drive "VFD" (200) associated with a transport refrigeration unit "TRU" (102), the method comprising:
configuring at least a portion of the VFD downstream or upstream of evaporator coils (110) in an evaporator compartment (108-1) associated with the TRU; and
supplying at least a portion of air being cooled by the evaporator coils towards the corresponding portion of the VFD in the evaporator compartment.

13. The method of claim 12, wherein the VFD (200) comprises a plurality of heat-dissipating structures (202) protruding from the VFD, wherein the method comprises the steps of:
disposing at least the plurality of heat-dissipating structures associated with the VFD in an airflow path downstream of the evaporator coils (110) in the evaporator compartment (108-1); and
supplying at least a portion of the air to be cooled or post cooling by the evaporator coils towards the plurality of heat-dissipating structures of the VFD.

14. The method of claims 12 or 13, wherein the method comprises the steps of at least partially disposing the VFD (200) in a structure separating the evaporator compartment (108-1) and a condenser compartment (108-2) associated with the TRU (102).

15. The method of claims 12 or 13, wherein the method comprises the steps of fully disposing the VFD (200) within the evaporator compartment (108-1) of the TRU (102) such that the VFD remains downstream of the evaporator coils (110).
